# EUROPEAN PATENT APPLICATION

(11) **EP 2 579 261 A1**
(43) Date of publication of application: **10.04.2013**
(21) Application number: 11786430.6
(22) Date of filing: 14.04.2011
(51) Int. Cl.: G21C 17/003, F22B 37/02, G21C 19/02

(54) **WORKING DEVICE FOR USE IN WATER CHAMBER**

(30) Priority: 28.05.2010 JP 2010123541
(71) Applicant: Mitsubishi Heavy Industries, Ltd., Tokyo 108-8215 (JP)
(72) Inventor: HOSOE, Fumihiro, Minato-ku Tokyo 108-8215 (JP)
(74) Representative: Intès, Didier Gérard André
(86) International application number: PCT/JP2011/059275
(87) International publication number: WO 2011/148730

(57) **Abstract**

A water-chamber working apparatus (1) that performs a predetermined work inside a water chamber (131) of a steam generator (130) including a support shaft (2) that is formed to be extendable and retractable, a rotary means (3) that is respectively provided at opposite ends of the support shaft (2) rotatably around a vertical shaft center, while coming into contact with an inner wall surface (131a) of the water chamber (131) by extension of the support shaft (2), and a movable body (4) that is provided to be movable along the support shaft (2).

## Description

### Field

The present invention relates to a water-chamber working apparatus that performs a predetermined work inside a water chamber of a steam generator. Background

In a work performed in a water chamber of a steam generator provided in a nuclear power plant, it is desired to reduce the workload of workers. Conventionally, therefore, there is a technique in which a water-chamber working apparatus is introduced into a water chamber, and the water-chamber working apparatus is remote-controlled to perform a work in the water chamber.

For example, Patent Literature 1 discloses a water-chamber working apparatus (a remote inspection apparatus) that performs flaw detection of a number of heat transfer tubes in a steam generator. In this water-chamber working apparatus, a clamp shaft is inserted into a plurality of heat transfer tubes provided in the steam generator to support a walking guide robot (hereinafter, "movable body") so as to be suspended from a tube plate of the steam generator. The movable body moves along the tube plate by replacing the clamp shaft with respect to the heat transfer tubes.

### Citation List

### Patent Literature

Patent Literature 1: Japanese Patent Application Laid-open No. 10-227765 Summary

### Technical Problem

However, in a water-chamber working apparatus in a mode in which a movable body is suspended from a tube plate, like the water-chamber working apparatus described in Patent Literature 1, its design is made carefully enough so that the movable body does not fall from the tube plate, and remote-controlling is performed cautiously so that the movable body does not fall from the tube plate. As a result, the design of the movable body becomes complicated in order to cause the movable body to move stably along the tube plate, and working hours may increase to remote-control the movable body cautiously.

The present invention has been achieved to solve the above problems, and an object of the present invention is to provide a water-chamber working apparatus that can stably support and easily move a movable body in a water chamber.

### Solution to Problem

According to an aspect of the present invention, a water-chamber working apparatus that performs a predetermined work inside a water chamber of a steam generator, includes: a support shaft that is formed to be extendable and retractable; a rotary unit that is respectively provided at opposite ends of the support shaft and is provided rotatably around a vertical shaft center, while coming into contact with an inner wall surface of the water chamber by extension of the support shaft; and a movable body that is provided to be movable along the support shaft.

According to the water-chamber working apparatus, the support shaft is spanned in the water chamber by extension thereof, and the movable body moves along the support shaft. Therefore, the movable body can be stably supported in the water chamber and can easily move. Furthermore, the support shaft moves horizontally by rotation of the rotary unit. Accordingly, the movable body can be moved to another area in which the support shaft is spanned.

Advantageously, in the water-chamber working apparatus, the support shaft includes an extension mechanism that biases the support shaft in an extending direction constantly, and the rotary unit includes a drive mechanism that drives rotation of the rotary unit.

According to the water-chamber working apparatus, the horizontal movement of the support shaft can be remote-controlled by extension of the support shaft and rotation of the rotary unit.

Advantageously, in the water-chamber working apparatus, the support shaft includes an extension and retraction mechanism that drives the support shaft to extend or retract.

According to the water-chamber working apparatus, the horizontal movement of the support shaft can be remote-controlled by the extension and retraction mechanism of the support shaft.

Advantageously, the water-chamber working apparatus further includes a swinging shaft that is provided to be extendable and retractable to support the movable body, with a base end thereof being provided on the support shaft and being swingable in a horizontal direction, and the rotary unit being provided at an apex thereof.

The inner wall surface of the water chamber is formed in a quarter-spherical shape, and thus it is difficult to move the movable body to corners of the tube plate. In this regard, according to the water-chamber working apparatus, the movable body can be moved to the corners of the tube plate by the swinging shaft by moving the movable body along the swinging shaft, while swinging the swinging shaft along an arc-like shape of the water chamber.

Advantageously, in the water-chamber working apparatus, the support shaft and the swinging shaft include an extension mechanism that biases the support shaft and the swinging shaft, respectively, in an extending direction constantly, and the rotary unit includes a drive mechanism that drives rotation of the rotary unit.

According to the water-chamber working apparatus, the horizontal movement of the support shaft can be remote-controlled by extension of the support shaft and the swinging shaft and rotation of the rotary unit.

Advantageously, in the water-chamber working apparatus, the support shaft and the swinging shaft include an extension and retraction mechanism that drives the support shaft and the swinging shaft to extend or retract, respectively.

According to the water-chamber working apparatus, the horizontal movement of the support shaft can be remote-controlled by the extension and retraction mechanism of the support shaft and the swinging shaft.

Advantageously, in the water-chamber working apparatus, the rotary unit includes a drive mechanism that drives rotation of the rotary unit.

According to the water-chamber working apparatus, the horizontal movement of the support shaft can be remote-controlled by extension and retraction of the support shaft (and the swinging shaft) and rotation of the rotary unit.

Advantageously, in the water-chamber working apparatus, the rotary unit includes a rotation-direction changing mechanism that can change a rotation direction in a mode in which the rotary unit rotates around a horizontal shaft center.

According to the water-chamber working apparatus, by having the rotation-direction changing mechanism, the water-chamber working apparatus can be vertically moved in the water chamber while the rotary unit is rotating, at the time of installing the water-chamber working apparatus in the water chamber. As a result, the movable body can be easily moved, and the water-chamber working apparatus can be easily installed.

Advantageously, the water-chamber working apparatus further includes a guide unit that guides a working tube extending from a working device that is provided in the movable body along with a movement of the movable body.

According to the water-chamber working apparatus, the working tube can be smoothly guided while reducing friction resistance associated with the working tube, without generating unnecessary looseness in the working tube or without stretching the working tube more than necessary along with a movement of the movable body.

Advantageously, the water-chamber working apparatus further includes a shaft-position regulation unit that regulates a shortest approaching position between the support shaft and a tube plate of the water chamber.

According to the water-chamber working apparatus, positioning of a working position of the movable body can be easily performed and a work can be easily performed by maintaining a distance between the support shaft and the tube plate.

Advantageously, the water-chamber working apparatus further includes a movable-body position detection unit that detects a shortest approaching position between the movable body and the rotary unit.

According to the water-chamber working apparatus, an incident in which the movable body collides with the rotary unit is prevented, thereby facilitating remote-controlling of the movable body.

Advantageously, the water-chamber working apparatus further includes a flaw detection unit that performs, as a predetermined work, detection of a flaw formed in heat transfer tubes provided in the steam generator.

The heat transfer tubes are open to a downward surface of the tube plate, and a probe needs to be inserted from a downside in order to detect a flaw in the heat transfer tubes. The inner wall surface of the water chamber is formed in a quarter-spherical shape, and thus fixation of the apparatus is difficult. In this regard, according to the water-chamber working apparatus, a support shaft formed to be extendable and retractable, a rotary unit respectively provided at opposite ends of the support shaft rotatably around a vertical shaft center, while coming into contact with an inner wall surface of the water chamber by extension of the support shaft, and a movable body that is provided to be movable along the support shaft are provided. Therefore, the water-chamber working apparatus is suitable for detecting a flaw in the heat transfer tubes. As a result, at the time of detecting a flaw in the heat transfer tubes, remarkable effects such that the movable body can be stably supported in the water chamber and can be easily moved can be obtained.

Advantageously, the water-chamber working apparatus further includes an imaging unit that images moving positions of the movable body.

According to the water-chamber working apparatus, positions of the support shaft and the movable body can be confirmed from outside of the water chamber. Accordingly, a time during which a worker is exposed to radiation can be reduced, thereby enabling to provide a safe working environment.

### Advantageous Effects of Invention

According to the present invention, a movable body can be stably supported in a water chamber and it can be easily moved.

### Brief Description of Drawings

FIG. 1 depicts a general nuclear power plant.
FIG. 2 is a configuration diagram of a water chamber of a steam generator provided in a nuclear power plant shown in FIG. 1.
FIG. 3 is an A-A sectional view of FIG. 2.
FIG. 4 is a side view of a water-chamber working apparatus according to a first embodiment of the present invention.
FIG. 5 is a plan view of the water-chamber working apparatus according to the first embodiment of the present invention.
FIG. 6 is a schematic configuration diagram of a support shaft of the water-chamber working apparatus according to the first embodiment of the present invention.
FIG. 7 is a schematic configuration diagram of a movable body of the water-chamber working apparatus according to the first embodiment of the present invention.
FIG. 8 is a side view of a rotation-direction changing mechanism of a water-chamber working apparatus according to a second embodiment of the present invention.
FIG. 9 is a side view of the water-chamber working apparatus according to the second embodiment of the present invention.
FIG. 10 is a plan view of a water-chamber working apparatus according to a third embodiment of the present invention.
FIG. 11 is a schematic configuration diagram of a support shaft of a water-chamber working apparatus according to a fourth embodiment of the present invention. Description of Embodiments

Exemplary embodiments of the present invention will be explained below in detail with reference to the accompanying drawings. The present invention is not limited to these embodiments. In addition, constituent elements in the embodiments include elements replaceable by those skilled in the art, or substantially the same elements.

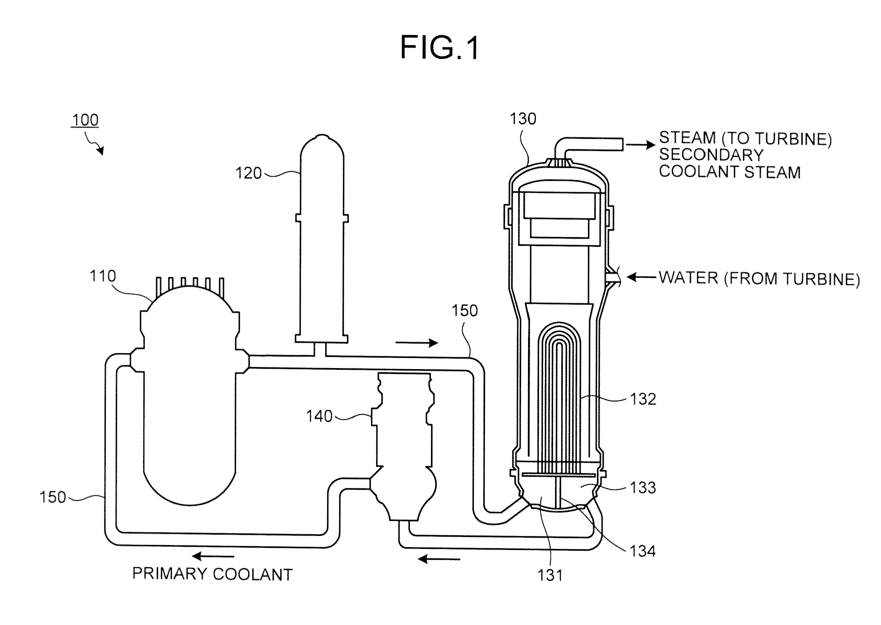

An embodiment of the present invention is explained with reference to the drawings. FIG. 1 depicts a general nuclear power plant. As a nuclear power plant 100, for example, there is a pressurized water reactor (PWR). In the nuclear power plant 100, a reactor vessel 110, a pressurizer 120, a steam generator 130, and a pump 140 as structural objects are sequentially coupled by a primary coolant pipe 150, to form a circulation pathway of a primary coolant. A circulation pathway of a secondary coolant is also formed between the steam generator 130 and a turbine (not shown).

In the nuclear power plant 100, the primary coolant is heated in the reactor vessel 110 to become a high-temperature and high-pressure primary coolant, which is supplied to the steam generator 130 via the primary coolant pipe 150 while being pressurized by the pressurizer 120 to maintain the pressure constant. In the steam generator 130, the primary coolant flows into an inlet-side water chamber 131, and is supplied from the inlet-side water chamber 131 to a plurality of U-shaped heat transfer tubes 132. Heat exchange is performed between the primary coolant and the secondary coolant in the heat transfer tubes 132, and the secondary coolant is evaporated to generate steam. The secondary coolant, which becomes steam by heat exchange, is supplied to the turbine. The turbine is driven by evaporation of the secondary coolant. Power of the turbine is transmitted to a power generator (not shown) to generate electric power. Steam used for driving the turbine is condensed to become water, and is supplied to the steam generator 130. Meanwhile, the primary coolant after heat exchange is recovered to the pump 140 side via the primary coolant pipe 150.

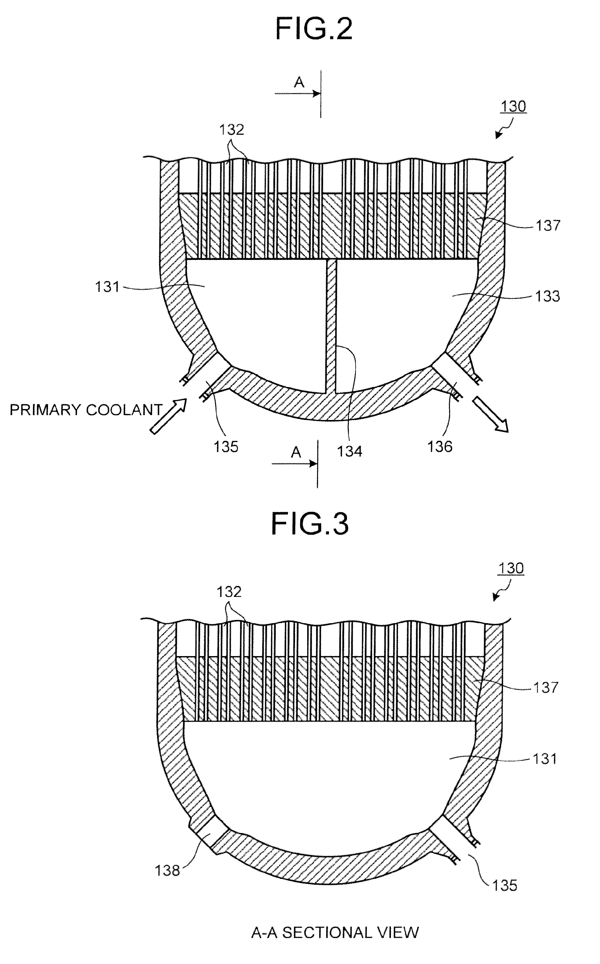

As shown in FIG. 2 and FIG. 3, in the steam generator 130, an inlet nozzle 135 is provided in the inlet-side water chamber 131. The primary coolant pipe 150 on the inlet side is welded and connected to the inlet nozzle 135. In the steam generator 130, an outlet nozzle 136 is also provided in an outlet-side water chamber 133. The primary coolant pipe 150 on the outlet side is welded and connected to the outlet nozzle 136. The inlet-side water chamber 131 and the outlet-side water chamber 133 are provided with a tube plate 137 installed on a ceiling and separated from each other by a partition plate 134. The tube plate 137 supports lower ends of the heat transfer tubes 132, and divides an upper part of the steam generator 130 and the water chambers 131 and 133. A maintenance hatch 138 from which a worker enters and exits the water chambers 131 and 133 is provided in the inlet-side water chamber 131 and the outlet-side water chamber 133. The inlet-side water chamber 131 and the outlet-side water chamber 133 are formed, respectively, in a quarter-spherical shape.

### [First embodiment]

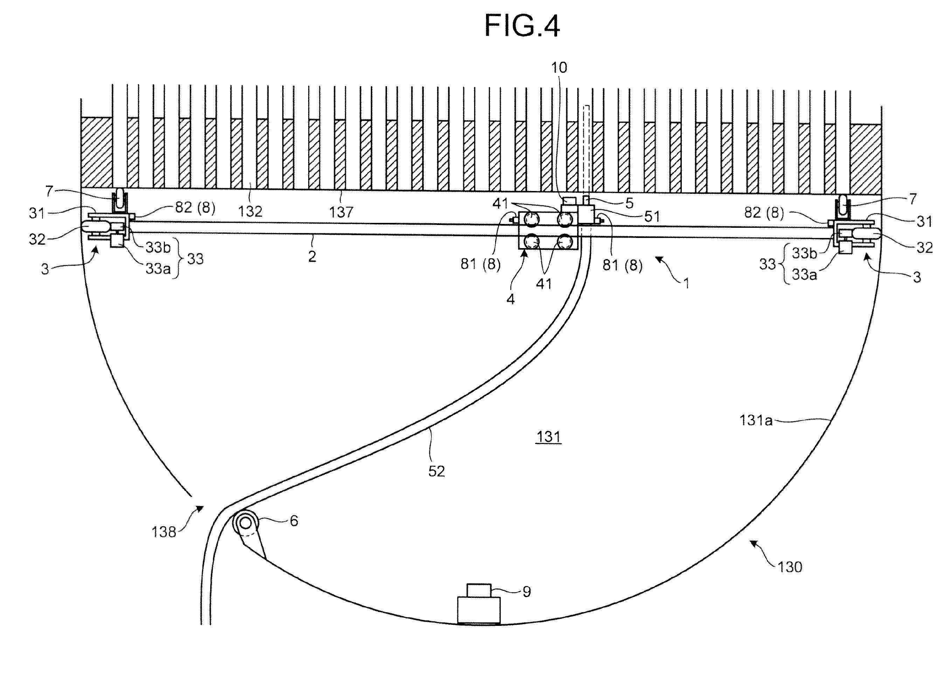

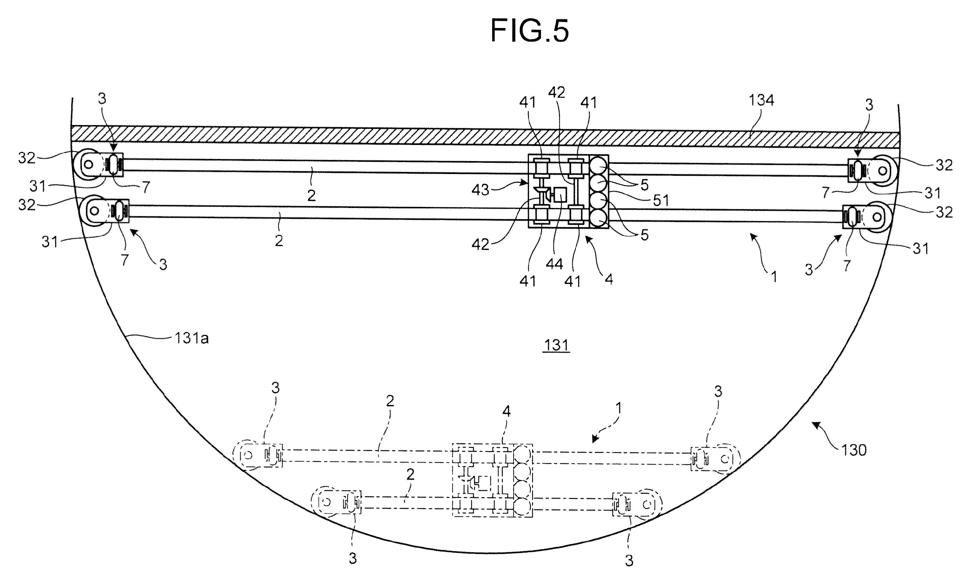

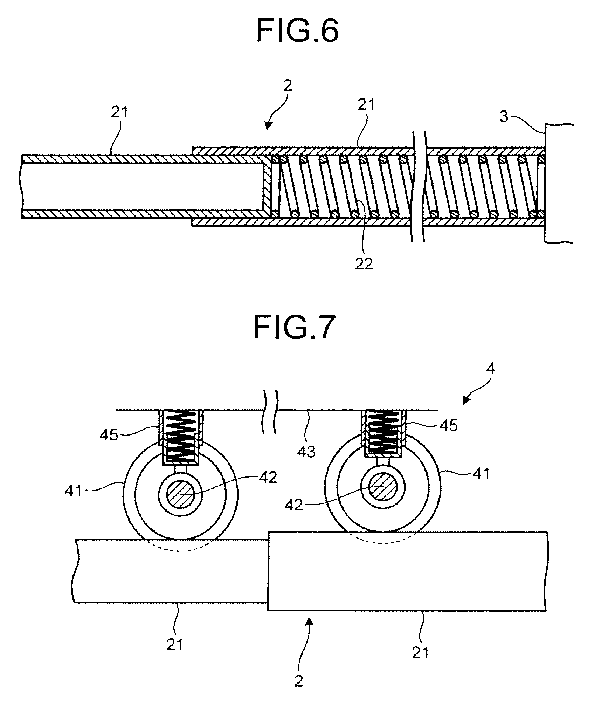

A water-chamber working apparatus 1 according to the present embodiment is explained below. FIG. 4 is a side view of a water-chamber working apparatus according to the present embodiment. FIG. 5 is a plan view of the water-chamber working apparatus according to the present embodiment. FIG. 6 is a schematic configuration diagram of a support shaft of the water-chamber working apparatus according to the present embodiment. FIG. 7 is a schematic configuration diagram of a movable body of the water-chamber working apparatus according to the present embodiment.

As shown in FIG. 4 and FIG. 5, the water-chamber working apparatus 1 performs a predetermined work inside the water chambers 131 and 133 (in FIG. 4 and FIG. 5, the inlet-side water chamber 131 is shown, and in the following explanations, reference sign 131 of the inlet-side water chamber is used, including the outlet-side water chamber 133 as the water chamber) of the steam generator 130. In the present embodiment, for example, the predetermined work is eddy current testing (ECT), which is a work for detecting a flaw in the heat transfer tubes 132. The water-chamber working apparatus 1 includes a support shaft 2, a rotary means 3, and a movable body 4.

The support shaft 2 has a rod-like shape, and is formed to be extendable and retractable in a longitudinal direction thereof. As shown in FIG. 6, the support shaft 2 includes divided shafts 21 divided into plural (at least two), and extends or retracts in the longitudinal direction by inserting one into the other at a joint portion of respective divided shafts 21. Furthermore, although not shown in the drawings, the support shaft 2 has a squeezing portion formed in the joint portion of the divided shafts 21 so that the joint portion is not separated in the most extended state. The support shaft 2 in the most extended state has a length equal to or longer than the length of a portion of the water chamber 131 where an inner diameter thereof in a horizontal direction is the longest. The cross sectional shape of the support shaft 2 is not particularly limited to any particular shape.

As shown in FIG. 6, the support shaft 2 has an extension mechanism 22 that biases the support shaft 2 constantly in an extending direction. For example, the extension mechanism 22 is formed as a compression spring provided in the support shaft 2, and acts to push and extend the divided shafts 21 to each other.

As shown in FIG. 4 and FIG. 5, the rotary means 3 are provided respectively at opposite ends of the support shaft 2, and a roller 32 is provided in a frame 31 attached to the end of the support shaft 2, rotatably around a vertical shaft center. Therefore, the rotary means 3 rotates and moves in a horizontal direction along an inner wall surface 131a of the water chamber 131, while coming into contact with the inner wall surface 131a of the water chamber 131 by extension of the support shaft 2. The inner wall surface 131a of the water chamber 131 represents a spherical wall surface in the water chamber 131, excluding the partition plate 134 and the tube plate 137.

Furthermore, the rotary means 3 has a drive mechanism 33 that rotates the roller 32. The drive mechanism 33 includes a motor 33a and a rotation transmission unit 33b that transmits rotation of the motor 33a to the roller 32. As the motor 33a of the drive mechanism 33, a motor with a brake is applied. By applying the motor with a brake, a position at which the support shaft 2 has moved can be maintained by rotating the rotary means 3 by the drive mechanism 33. For example, the motor with a brake includes a motor with a brake that generates a braking force by operating when there is no excitation. The rotary means 3 is driven to move along the inner wall surface 131a of the water chamber 131 by the drive mechanism 33.

The movable body 4 is provided to be movable along the support shaft 2, as shown in FIG. 4 and FIG. 5. The movable body 4 includes wheels 41 coming into contact with an external surface of the support shaft 2, a vehicle body 43 that rotatably supports a rotary shaft 42 of the wheels 41, and a drive motor 44 that rotates the rotary shaft 42. The wheels 41 are provided respectively at opposite ends of the rotary shaft 42. An axle unit in which the wheels 41 are provided at the opposite ends of the rotary shaft 42 is provided in a pair above and below the support shaft 2 so as to locate the support shaft 2 therebetween. The pair of axle units is provided in plural (FIG. 4 and FIG. 5 depict a mode including two axle units). The drive motor 44 is provided to rotate the rotary shaft 42 with respect to at least one axle unit. In the movable body 4, because the wheels 41 rotate via the rotary shaft 42 by being driven by the drive motor 44, the vehicle body 43 moves along the support shaft 2.

Furthermore, the movable body 4 is formed so that each support shaft 2 is located between the wheels 41 from above and below, when a plurality of support shafts 2 are provided (FIG. 5 depicts a mode including two support shafts 2). Therefore, the movable body 4 maintains two support shafts 2 in a parallel arrangement. Furthermore, as described above, because the support shaft 2 is biased in an extending direction constantly by the extension mechanism 22, the two support shafts 2 are arranged in parallel in a horizontal direction in a state with the rotary means 3 coming into contact with the spherical inner wall surface 131a in the water chamber 131.

When the support shaft 2 is provided in plural, which exceeds two, the movable body 4 can include the wheels 41 corresponding to the number of the support shafts 2. The wheel 41 is provided with a concave portion that fits in the support shaft 2. Accordingly, the wheels 41 can stably rotate along the support shaft 2, and when the number of the support shaft 2 is one, it can be prevented that the wheels 41 rotate around a longitudinal direction of the support shaft 2 as an axis. Furthermore, to mount the vehicle body 43 on the support shaft 2 stably, it is desired to provide a balancer as a balancing weight. The configuration of the movable body 4 is not limited to a configuration in which the movable body 4 moves by being driven by the drive motor 44, and for example, the configuration may be such that the movable body 4 moves along the support shaft 2 by traction by a cable or the like from outside of the water chamber 131.

As shown in FIG. 7, a suspension mechanism 45 is provided in the wheel 41 of the movable body 4. The suspension mechanism 45 is provided to couple the rotary shaft 42 and the vehicle body 43 with each other, and biases the rotary shaft 42 in a direction separating the rotary shaft 42 and the vehicle body 43 from each other. As described above, the support shaft 2 includes a plurality (at least two) of divided shafts 21, and a stepped portion is formed in the joint portion of the respective divided shafts 21. The suspension mechanism 45 has a buffer function that does not pass on irregularities at the stepped portion to the vehicle body 43, and a function of pressing the wheel 41 against the support shaft 2, thereby stabilizing the movement of the movable body 4.

The movable body 4 is also provided with a working device 5 for performing a predetermined work. The working device 5 is a probe (flaw detection means) 5 that performs eddy current testing in the present embodiment. The probe 5 is to be inserted into the heat transfer tube 132, and is supported by a probe support body 51 attached to the vehicle body 43. In the present embodiment, the probe 5 is provided in plural (four) so that the probes are respectively inserted into a plurality (for example, four) of heat transfer tubes 132 to enable collective testing of the heat transfer tubes 132. The probe 5 is inserted into a working tube 52, and slid in the working tube 52 so as to be inserted into or removed from the heat transfer tube 132. As shown in FIG. 4, the working tube 52 is pulled out from the maintenance hatch 138 to outside of the water chamber 131.

The probe 5 is provided at the end in a moving direction of the movable body 4; however, the probe 5 can be also provided at the side in the moving direction of the movable body 4, for example. That is, the attachment position of the probe 5 to the movable body 4 is not limited to any specific position, and it suffices to be a position suitable for testing according to the position of the support shaft 2.

The working device for performing a predetermined work can be a working device, other than the probe 5 described above, such as an inspection device that inspects a crack or the like at a weld zone in the water chamber 131 such as a peripheral edge of the tube plate 137, a cutting device for repairing the weld zone, or a welding device for applying a weld after cutting.

Furthermore, as shown in FIG. 4, the water-chamber working apparatus 1 includes a guide means 6 that guides the working tube 52 extending from the probe 5 provided in the movable body 4 to an edge of the maintenance hatch 138 along with a movement of the movable body 4. The guide means 6 is formed as a pulley attached to the edge of the maintenance hatch 138, and guides the working tube 52, while reducing friction resistance associated with the working tube 52, without generating unnecessary looseness in the working tube 52 that is pushed into the water chamber 131 from the maintenance hatch 138 or dragged from the water chamber 131 or without stretching the working tube more than necessary, along with the movement of the movable body 4.

Furthermore, as shown in FIG. 4 and FIG. 5, the water-chamber working apparatus 1 includes a shaft-position regulation means 7. The shaft-position regulation means 7 is formed as a roller that is provided rotatably around a horizontal shaft center on an upper surface of the frame 31 of the rotary means 3. As shown in FIG. 4, the shaft-position regulation means 7 comes into contact with the tube plate 137 to regulate the shortest approaching position between the support shaft 2 and the tube plate 137. Because the shaft-position regulation means 7 is formed as a roller, the shaft-position regulation means 7 comes into contact with the tube plate 137 along with a movement of the support shaft 2 by the rotary means 3 along the inner wall surface 131a of the water chamber 131, to maintain the shortest approaching position between the support shaft 2 and the tube plate 137 and guide the support shaft 2 without blocking the movement thereof.

As shown in FIG. 4, the water-chamber working apparatus 1 also includes a movable-body position detection means 8 including a switch 81 provided at a front end and a rear end in the moving direction of the movable body 4 and an actuation unit 82 provided in the frame 31 of the rotary means 3 to actuate the switch 81. The movable-body position detection means 8 is to detect the shortest approaching position between the movable body 4 and the rotary means 3 by the movement of the movable body 4, that is, a position at which the movable body 4 approaches closest to the rotary means 3 without colliding with it. The movable-body position detection means 8 can include as the switch 81 and the actuation unit 82, for example, a limit switch and a switch actuating protrusion, or a light projection and reception sensor and a douser. The movable-body position detection means 8 can include the actuation unit 82 at the front end and the rear end in the moving direction and the switch 81 can be provided in the rotary means 3.

As shown in FIG. 4, the water-chamber working apparatus 1 also includes cameras (imaging means) 9 and 10 that image moving positions of the movable body 4. The camera 9 is installed in the water chamber 131 to confirm the moving position of the movable body 4 from outside of the water chamber 131. The camera 9 is preferably configured so that the imaging position in the water chamber 131 can be changed according to need or a particular spot can be enlarged. Furthermore, the camera 10 is installed on the vehicle body 43 of the movable body 4 to confirm a position of the probe 5 corresponding to the heat transfer tube 132 from outside of the water chamber 131. As the imaging means, it suffices that at least the camera 10 is provided.

To install the water-chamber working apparatus 1 according to the present embodiment described above in the water chamber 131, as shown in FIG. 4, the camera 9 as the imaging means is first installed in the water chamber 131. The camera 9 is installed by a worker who enters into the water chamber 131 from the maintenance hatch 138. The inside of the water chamber 131 is imaged by the camera 9, and the position of the movable body 4 is confirmed from outside of the water chamber 131.

Next, a unit of the water-chamber working apparatus 1 provided with the support shaft 2, the rotary means 3, and the movable body 4 is installed in the water chamber 131. Installation of the unit of the water-chamber working apparatus 1 is performed by a worker by using an attachment jig (not shown) from the maintenance hatch 138. The attachment jig is formed in a rod shape, and is used for pushing the support shaft 2 up to a position at which the shaft-position regulation means 7 comes into contact with the tube plate 137. At the position where the shaft-position regulation means 7 comes into contact with the tube plate 137, the support shaft 2 is spanned along the tube plate 137 in the water chamber 131. Accordingly, installation of the unit of the water-chamber working apparatus 1 is complete.

After installation of the water-chamber working apparatus 1 as described above, a predetermined work (eddy current testing) is performed by the water-chamber working apparatus 1 according to the present embodiment. That is, the movable body 4 is moved along the support shaft 2, to perform flaw detection of a predetermined heat transfer tube 132 (or testing or repairing the weld zone). The position of the movable body 4 at this time is confirmed from outside of the water chamber 131 by the cameras 9 and 10. When the work in the moving range of the support shaft 2 is complete, the support shaft 2 is horizontally moved by the drive mechanism 33 of the rotary means 3, and the work is performed at a moving destination, while moving the movable body 4 along the support shaft 2.

The rotary means 3 may not include the drive mechanism 33. In this case, the support shaft 2 is moved by the attachment jig described above or the like.

As described above, the water-chamber working apparatus 1 according to the present embodiment performs a predetermined work inside the water chamber 131 of the steam generator 130. The water-chamber working apparatus 1 includes the support shaft 2 provided to be extendable and retractable, the rotary means 3 respectively provided at opposite ends of the support shaft 2 rotatably around the vertical shaft center, while coming into contact with the inner wall surface 131a of the water chamber 131 by extension of the support shaft 2, and the movable body 4 provided to be movable along the support shaft 2.

According to the water-chamber working apparatus 1, the support shaft 2 is spanned in the water chamber 131 by extension thereof, and the movable body 4 moves along the support shaft 2. Therefore, the movable body 4 can be stably supported in the water chamber 131, and can be easily moved. Furthermore, the support shaft 2 moves horizontally by rotation of the rotary means 3. Accordingly, the movable body 4 can be moved to another area in which the support shaft 2 is spanned. That is, the water-chamber working apparatus 1 according to the present embodiment can be simplified in design for stably supporting the movable body 4 in the water chamber 131 as compared to a water-chamber working apparatus in a conventional mode in which a movable body is suspended from the tube plate, and working hours for remote-controlling the movable body 4 can be reduced.

Furthermore, in the water-chamber working apparatus 1 according to the present embodiment, the support shaft 2 includes the extension mechanism 22 that biases the support shaft 2 in an extending direction constantly, and the rotary means 3 includes the drive mechanism 33 that drives rotation of the rotary means 3.

According to the water-chamber working apparatus 1, the horizontal movement of the support shaft 2 can be remote-controlled by extension of the support shaft 2 and rotation of the rotary means 3.

The water-chamber working apparatus 1 according to the present embodiment also includes the guide means 6 that guides the working tube 52 extending from the probe (the working device) 5 provided in the movable body 4 along with a movement of the movable body 4.

According to the water-chamber working apparatus 1, the working tube 52 can be smoothly guided while reducing friction resistance associated with the working tube 52, without generating unnecessary looseness in the working tube 52 or without stretching the working tube 52 more than necessary along with a movement of the movable body 4.

Furthermore, the water-chamber working apparatus 1 according to the present embodiment includes the shaft-position regulation means 7 that regulates the shortest approaching position between the support shaft 2 and the tube plate 137.

According to the water-chamber working apparatus 1, because a distance between the support shaft 2 and the tube plate 137 can be maintained, a working position of the movable body 4 can be easily determined, thereby enabling to facilitate the work.

The water-chamber working apparatus 1 according to the present embodiment also includes the movable-body position detection means 8 that detects the shortest approaching position between the movable body 4 and the rotary means 3.

According to the water-chamber working apparatus 1, because it is prevented that the movable body 4 collides with the rotary means 3, a remote-controlling operation of the movable body 4 can be facilitated.

In the water-chamber working apparatus 1 according to the present embodiment, the movable body 4 includes the probe (flaw detection means) 5 that detects a flaw in the heat transfer tubes 132 provided in the steam generator 130 as a predetermined work.

The heat transfer tubes are open to a downward surface of the tube plate 137, and the probe 5 needs to be inserted from the downside in order to detect a flaw in the heat transfer tubes. The inner wall surface 131a of the water chamber 131 is formed in a quarter-spherical shape, and thus fixation of the apparatus is difficult. In this regard, the water-chamber working apparatus 1 performs a predetermined work inside the water chamber 131 of the steam generator 130, and includes the support shaft 2 formed to be extendable and retractable, the rotary means 3 respectively provided at opposite ends of the support shaft 2 rotatably the vertical shaft center, while coming into contact with the inner wall surface 131a of the water chamber 131 by extension of the support shaft 2, and the movable body 4 provided to be movable along the support shaft 2. Therefore, the water-chamber working apparatus 1 is suitable for detecting a flaw in the heat transfer tubes 132. As a result, at the time of detecting a flaw in the heat transfer tubes 132, such remarkable effects that the movable body 4 can be stably supported in the water chamber 131 and can be easily moved can be obtained.

The water-chamber working apparatus 1 also includes the imaging means 9 and 10 that images moving positions of the movable body 4.

According to the water-chamber working apparatus 1, because the positions of the support shaft 2 and the movable body 4 can be confirmed from outside of the water chamber 131, the time during which a worker is exposed to radiation can be reduced, thereby enabling to provide a safe working environment. Furthermore, by imaging the inside of the water chamber 131 by the cameras 9 and 10, the position of the movable body 4 for matching the probe (the working device) 5 to a predetermined heat transfer tube 132 can be appropriately ascertained.

### [Second embodiment]

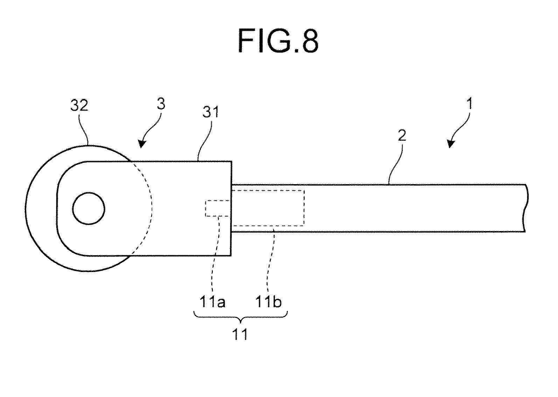

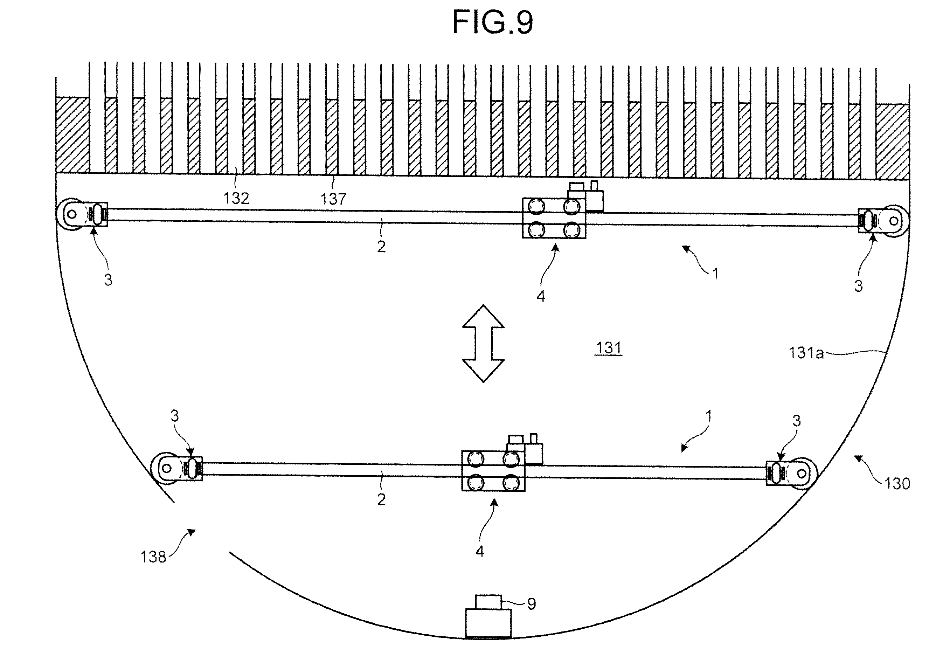

FIG. 8 is a side view of a rotation-direction changing mechanism of a water-chamber working apparatus according to the present embodiment, and FIG. 9 is a side view of the water-chamber working apparatus according to the present embodiment. In a second embodiment described below, constituent elements identical to those described in the first embodiment are denoted by like reference signs and explanations thereof will be omitted.

As shown in FIG. 8, in the water-chamber working apparatus 1 according to the present embodiment, the rotary means 3 includes a rotation-direction changing mechanism 11 with respect to the water-chamber working apparatus 1 according to the first embodiment described above.

The rotation-direction changing mechanism 11 is provided rotatably around a horizontal shaft center in a direction in which the frame 31 of the rotary means 3 lies along a longitudinal direction of the support shaft 2. A rotation mechanism 11b is provided on a rotating shaft 11a of the rotary means 3. The rotation mechanism 11b is for rotating the shaft 11a by a rotary actuator (such as water pressure, air pressure, hydraulic pressure, or servo motor), and rotates the rotary means 3 by 90 degrees around the horizontal shaft center. Accordingly, the rotary means 3 is switched to a mode in which the rotary means 3 rotates around the vertical shaft center (see FIG. 4 and FIG. 5) and a mode in which the rotary means 3 rotates around the horizontal shaft center as shown in FIG. 9.

To install the water-chamber working apparatus 1 according to the present embodiment in the water chamber 131, as shown in FIG. 9, the camera 9 as the imaging means is first arranged in the water chamber 131. The camera 9 is installed by a worker who enters into the water chamber 131 from the maintenance hatch 138. The inside of the water chamber 131 is imaged by the camera 9, and the position of the movable body 4 is confirmed from outside of the water chamber 131.

Next, a unit of the water-chamber working apparatus 1 provided with the support shaft 2, the rotary means 3, the movable body 4, and the rotation-direction changing mechanism 11 is installed in the water chamber 131. Installation of the unit of the water-chamber working apparatus 1 is performed in such a manner that the rotary means 3 is switched to the mode in which the rotary means 3 rotates around the horizontal shaft center by the rotation-direction changing mechanism 11, and as shown in FIG. 9, a worker places the support shaft 2 at the bottom of the water chamber 131 so as to extend or retract in a horizontal direction from the maintenance hatch 138. Subsequently, the worker pushes the support shaft 2 upward by using an attachment jig (not shown), so that the support shaft 2 vertically moves in the water chamber 131 while the rotary means 3 is rotating. The rotary means 3 is then switched to the mode in which the rotary means 3 rotates around the vertical shaft center (see FIG. 4 and FIG. 5) by the rotation-direction changing mechanism 11. If the shaft-position regulation means 7 is at the position where the shaft-position regulation means 7 comes into contact with the tube plate 137, the support shaft 2 is spanned along the tube plate 137 in the water chamber 131, thereby completing installation of the unit of the water-chamber working apparatus 1. If the shaft-position regulation means 7 is not at the position where the shaft-position regulation means 7 comes into contact with the tube plate 137, the worker only needs to push the support shaft 2 up to the position where the shaft-position regulation means 7 comes into contact with the tube plate 137 by the attachment jig.

After installation of the water-chamber working apparatus 1 as described above, a predetermined work (eddy current testing) is performed by the water-chamber working apparatus 1 according to the present embodiment. That is, the movable body 4 is moved along the support shaft 2, to perform flaw detection of a predetermined heat transfer tube 132 (or testing or repairing the weld zone). The position of the movable body 4 at this time is confirmed from outside of the water chamber 131 by the cameras 9 and 10. When the work in the moving range of the support shaft 2 is complete, the support shaft 2 is horizontally moved by the attachment jig or the like, and the work is performed at a moving destination, while moving the movable body 4 along the support shaft 2.

As described above, the water-chamber working apparatus 1 according to the present embodiment performs a predetermined work inside the water chamber 131 of the steam generator 130. The water-chamber working apparatus 1 includes the support shaft 2 provided to be extendable and retractable, the rotary means 3 respectively provided at opposite ends of the support shaft 2 rotatably around the vertical shaft center, while coming into contact with the inner wall surface 131a of the water chamber 131 by extension of the support shaft 2, and the movable body 4 provided to be movable along the support shaft 2. The rotary means 3 includes the rotation-direction changing mechanism 11 that can change the rotation direction in the mode in which the rotary means 3 rotates around the horizontal shaft center.

According to the water-chamber working apparatus 1, the support shaft 2 is spanned in the water chamber 131 by extension thereof, and the movable body 4 moves along the support shaft 2. Therefore, the movable body 4 can be stably supported in the water chamber 131, and can be easily moved. Furthermore, the support shaft 2 moves horizontally by rotation of the rotary means 3. Accordingly, the movable body 4 can be moved to another area in which the support shaft 2 is spanned. That is, the water-chamber working apparatus 1 according to the present embodiment can be simplified in design for stably supporting the movable body 4 in the water chamber 131 as compared to a water-chamber working apparatus in a conventional mode in which the movable body is suspended from the tube plate, and working hours for remote-controlling the movable body 4 can be reduced.

Further, according to the water-chamber working apparatus 1, because the rotary means 3 includes the rotation-direction changing mechanism 11, the water-chamber working apparatus 1 can be vertically moved in the water chamber 131 while the rotary means 3 is rotating, at the time of installing the water-chamber working apparatus 1 in the water chamber 131. Accordingly, the movable body 4 can be easily moved to facilitate installation of the water-chamber working apparatus 1.

In the water-chamber working apparatus 1 according to the present embodiment, the support shaft 2 has the extension mechanism 22 that biases the support shaft 2 in an extending direction constantly, and the rotary means 3 has the drive mechanism 33 that drives rotation of the rotary means 3.

According to the water-chamber working apparatus 1, the vertical movement and the horizontal movement of the support shaft 2 can be remote-controlled by extension of the support shaft 2 and rotation of the rotary means 3.

Effects identical to those of the first embodiment described above can be also achieved in the present embodiment by including the guide means 6, the shaft-position regulation means 7, the movable-body position detection means 8, the probe (flaw detection means) 5, and the imaging means 9 and 10 explained in the first embodiment.

### [Third embodiment]

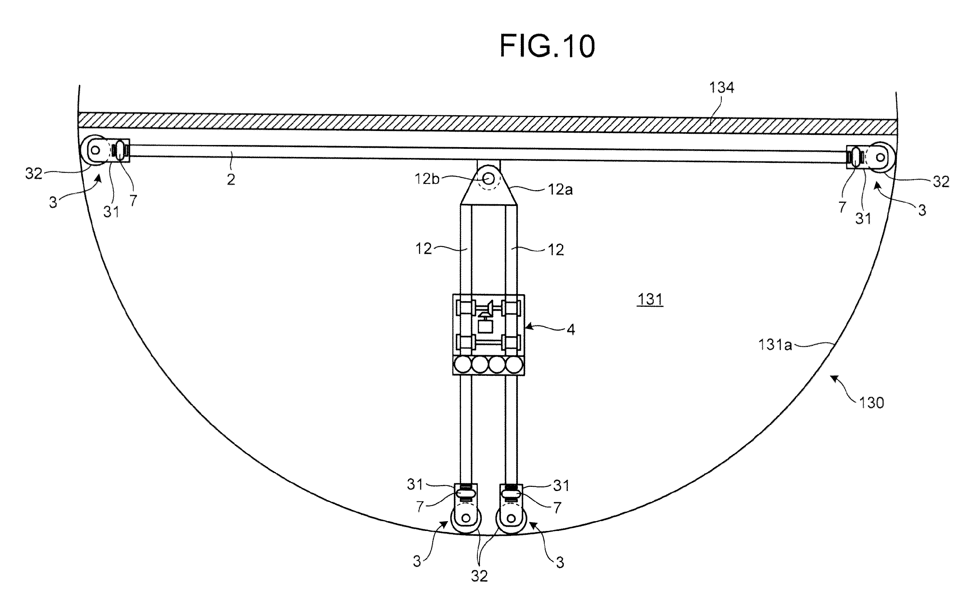

FIG. 10 is a plan view of a water-chamber working apparatus according to a third embodiment of the present invention. In the third embodiment described below, constituent elements identical to those described in the first embodiment are denoted by like reference signs and explanations thereof will be omitted.

As shown in FIG. 10, the water-chamber working apparatus 1 according to the present embodiment has a swinging shaft 12 with respect to the water-chamber working apparatus 1 according to the first embodiment.

The swinging shaft is a rod-like shape and is formed to be extendable and retractable in a longitudinal direction thereof. The extension and retraction configuration of the swinging shaft 12 is similar to that of the support shaft 2. While the number of the swinging shaft 12 can be one, in the present embodiment, as shown in FIG. 10, two swinging shafts are provided in parallel in a horizontal direction. Base ends thereof are coupled by a frame 12a, and attached to be swingable by a rotary shaft 12b to a central part of one support shaft 2 provided with the rotary means 3 at the opposite ends thereof. The rotary means 3 is provided at each apex of the swinging shaft 12. The movable body 4 is provided on the respective swinging shafts 12 to be movable along the longitudinal direction thereof. In FIG. 10, the support shaft 2 is shown as one; however, a plurality of support shafts 2 can be arranged in parallel in the horizontal direction and the swinging shaft 12 can be provided on one of these support shafts 2.

To install the water-chamber working apparatus 1 according to the present embodiment in the water chamber 131, the camera 9 as the imaging means is first arranged in the water chamber 131 (see FIG. 4). The camera 9 is installed by a worker who enters into the water chamber 131 from the maintenance hatch 138. The inside of the water chamber 131 is imaged by the camera 9, and the position of the movable body 4 is confirmed from outside of the water chamber 131.

Next, a unit of the water-chamber working apparatus 1 provided with the support shaft 2, the swinging shaft 12, the rotary means 3, and the movable body 4 is installed in the water chamber 131. Installation of the unit of the water-chamber working apparatus 1 is performed by a worker by using an attachment jig (not shown) from the maintenance hatch 138. At the position where the shaft-position regulation means 7 comes into contact with the tube plate 137, the support shaft 2 is spanned along the tube plate 137 in the water chamber 131. Accordingly, installation of the unit of the water-chamber working apparatus 1 is complete.

When the rotary means 3 has the rotation-direction changing mechanism 11, in order to install the water-chamber working apparatus 1 according to the present embodiment in the water chamber 131, a unit of the water-chamber working apparatus 1 provided with the support shaft 2, the swinging shaft 12, the rotary means 3, the movable body 4, and the rotation-direction changing mechanism 11 is installed in the water chamber 131 after installation of the camera 9. Installation of the unit of the water-chamber working apparatus 1 is performed in such a manner that the rotary means 3 is switched to a mode in which the rotary means 3 rotates around the horizontal shaft center by the rotation-direction changing mechanism 11, and a worker places the support shaft 2 at the bottom of the water chamber 131 so as to extend or retract in the horizontal direction from the maintenance hatch 138 (see FIG. 9). Subsequently, the worker pushes the support shalt 2 upward by using an attachment jig (not shown), so that the support shaft 2 vertically moves in the water chamber 131 while the rotary means 3 is rotating. The rotary means 3 is then switched to a mode in which the rotary means 3 rotates around the vertical shaft center (see FIG. 4 and FIG. 5) by the rotation-direction changing mechanism 11. If the shaft-position regulation means 7 is at the position where the shaft-position regulation means 7 comes into contact with the tube plate 137, the support shaft 2 is spanned along the tube plate 137 in the water chamber 131, thereby completing installation of the unit of the water-chamber working apparatus 1. If the shaft-position regulation means 7 is not at the position where the shaft-position regulation means 7 comes into contact with the tube plate 137, the worker only needs to push the support shaft 2 up to the position where the shaft-position regulation means 7 comes into contact with the tube plate 137 by the attachment jig.

After installation of the water-chamber working apparatus 1 as described above, a predetermined work (eddy current testing) is performed by the water-chamber working apparatus 1 according to the present embodiment. That is, the movable body 4 is moved along the swinging shaft 12, to perform flaw detection of a predetermined heat transfer tube 132 (or testing or repairing the weld zone). The position of the movable body 4 at this time is confirmed from outside of the water chamber 131 by the cameras 9 and 10. When the work in the moving range of the support shaft 2 is complete, the swinging shaft 12 is moved by the attachment jig or the like or the support shaft 2 is horizontally moved according to need, and the work is performed at a moving destination, while moving the movable body 4 along the swinging shaft 12.

As described above, the water-chamber working apparatus 1 according to the present embodiment performs a predetermined work inside the water chamber 131 of the steam generator 130. The water-chamber working apparatus 1 includes the support shaft 2 provided to be extendable and retractable, the rotary means 3 respectively provided at opposite ends of the support shaft 2 rotatably around the vertical shaft center, while coming into contact with the inner wall surface 131a of the water chamber 131 by extension of the support shaft 2, and the movable body 4 provided to be movable along the support shaft 2. The water-chamber working apparatus 1 further includes the swinging shaft 12 provided to be extendable and retractable to support the movable body that is provided to be movable, with a base end thereof being provided to be swingable on the support shaft and the rotary unit being provided at the apex thereof.

According to the water-chamber working apparatus 1, the support shaft 2 is spanned in the water chamber 131 by extension thereof, and the movable body 4 moves along the support shaft 2. Therefore, the movable body 4 can be stably supported in the water chamber 131, and can be easily moved. Furthermore, the support shaft 2 moves horizontally by rotation of the rotary means 3. Accordingly, the movable body 4 can be moved to another area in which the support shaft 2 is spanned. That is, the water-chamber working apparatus 1 according to the present embodiment can be simplified in design for stably supporting the movable body 4 in the water chamber 131 as compared to a water-chamber working apparatus in a conventional mode in which the movable body is suspended from the tube plate, and working hours for remote-controlling the movable body 4 can be reduced.

The inner wall surface 131a of the water chamber 131 is formed in a quarter spherical shape, and thus it is difficult to move the movable body 4 to the corners of the tube plate 137. In this regard, according to the water-chamber working apparatus 1, the movable body 4 can be moved to the corners of the tube plate 137 by the swinging shaft 12 by moving the movable body 4 along the swinging shaft 12, while swinging the swinging shaft 12 along an arc-like shape of the water chamber 131.

Furthermore, in the water-chamber working apparatus 1 according to the present embodiment, the supports shaft 2 and the swinging shaft 12 include the extension mechanism 22 that biases the support shaft 2 and the swinging shaft 12, respectively, in an extending direction constantly, and the rotary means 3 includes the drive mechanism 33 that drives rotation of the rotary means 3.

According to the water-chamber working apparatus 1, the vertical movement and the horizontal movement of the support shaft 2 can be remote-controlled by extension of the support shaft 2 and rotation of the rotary means 3.

Furthermore, in the water-chamber working apparatus 1 according to the present embodiment, the rotary means 3 includes the rotation-direction changing mechanism 11 that can change the rotation direction in the mode in which the rotary means 3 rotates around the horizontal shaft center.

According to the water-chamber working apparatus 1, because the rotary means 3 includes the rotation-direction changing mechanism 11, the water-chamber working apparatus 1 can be vertically moved in the water chamber 131 while the rotary means 3 is rotating, at the time of installing the water-chamber working apparatus 1 in the water chamber 131. Accordingly, the movable body 4 can be easily moved to facilitate installation of the water-chamber working apparatus 1.

Effects identical to those of the first embodiment described above can be also achieved in the present embodiment by including the guide means 6, the shaft-position regulation means 7, the movable-body position detection means 8, the probe (flaw detection means) 5, and the imaging means 9 and 10 explained in the first embodiment.

### [Fourth embodiment]

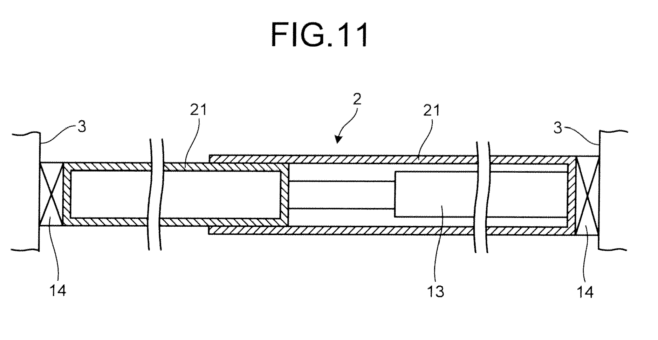

FIG. 11 is a schematic configuration diagram of a support shaft of a water-chamber working apparatus according to a fourth embodiment of the present invention. In the fourth embodiment described below, constituent elements identical to those described in the first to third embodiments are denoted by like reference signs and explanations thereof will be omitted.

As shown in FIG. 11, in the water-chamber working apparatus 1 according to the present embodiment, the support shaft 2 has an extension and retraction mechanism 13 that drives the support shaft 2 to extend or retract, with respect to the water-chamber working apparatus 1 according to the first embodiment.

For example, the extension and retraction mechanism 13 is configured as a direct operated actuator (such as water pressure, air pressure, hydraulic pressure, or servo motor) provided in the support shaft 2, so as to shorten or extend the divided shafts.

An elastic member 14 that acts in a direction separating the support shaft 2 and the rotary means 3 from each other constantly is provided between the support shaft 2 and the frame 31 of the rotary means 3. It suffices that the elastic member 14 is provided at least at one end of the support shaft 2.

To install the water-chamber working apparatus 1 according to the present embodiment in the water chamber 131, the camera 9 as the imaging means is first arranged in the water chamber 131 (see FIG. 4). The camera 9 is installed by a worker who enters into the water chamber 131 from the maintenance hatch 138. The inside of the water chamber 131 is imaged by the camera 9, and the position of the movable body 4 is confirmed from outside of the water chamber 131.

Next, a unit of the water-chamber working apparatus 1 provided with the rotary means 3 and the movable body 4 is installed in the water chamber 131. Installation of the unit of the water-chamber working apparatus 1 is performed by a worker by using an attachment jig (not shown) from the maintenance hatch 138. At the position where the shaft-position regulation means 7 comes into contact with the tube plate 137, the support shaft 2 is spanned along the tube plate 137 in the water chamber 131. Accordingly, installation of the unit of the water-chamber working apparatus 1 is complete.

After installation of the water-chamber working apparatus 1 as described above, a predetermined work (eddy current testing) is performed by the water-chamber working apparatus 1 according to the present embodiment. That is, the movable body 4 is moved along the support shaft 2, to perform flaw detection of a predetermined heat transfer tube 132 (or testing or repairing the weld zone). The position of the movable body 4 at this time is confirmed from outside of the water chamber 131 by the cameras 9 and 10. When the work in the moving range of the support shaft 2 is complete, the support shaft 2 is extended or retracted by the extension and retraction mechanism 13. Accordingly, the support shaft 2 is horizontally moved, while the rotary means 3 is rotating, and the work is performed at a moving destination, while moving the movable body 4 again along the support shaft 2. At the time of retracting the support shaft 2, the elastic member 14 presses the rotary means 3 against the inner wall surface 131a of the water chamber 131, thereby preventing the support shaft 2 from moving downward.

When the rotary means 3 has the rotation-direction changing mechanism 11, in order to install the water-chamber working apparatus 1 according to the present embodiment in the water chamber 131, a unit of the water-chamber working apparatus 1 provided with the support shaft 2, the rotary means 3, the movable body 4, and the rotation-direction changing mechanism 11 is installed in the water chamber 131 after installation of the camera 9. Installation of the unit of the water-chamber working apparatus 1 is performed in such a manner that the rotary means 3 is switched to the mode in which the rotary means 3 rotates around the horizontal shaft center by the rotation-direction changing mechanism 11, and a worker places the support shaft 2 at the bottom of the water chamber 131 so as to extend or retract in a horizontal direction from the maintenance hatch 138 (see FIG. 9). Subsequently, the worker extends the support shaft 2 by the extension and retraction mechanism 13 so that the support shaft 2 vertically moves in the water chamber 131 while the rotary means 3 is rotating. The rotary means 3 is then switched to the mode in which the rotary means 3 rotates around the vertical shaft center (see FIG. 4 and FIG. 5) by the rotation-direction changing mechanism 11. When the support shaft 2 is extended by the extension and retraction mechanism 13, the support shaft 2 horizontally moves in a direction approaching the partition plate 134, while the rotary means 3 is rotating along a quarter spherical shape of the inner wall surface 131a of the water chamber 131. If the shaft-position regulation means 7 is at the position where the shaft-position regulation means 7 comes into contact with the tube plate 137, the support shaft 2 is spanned along the tube plate 137 in the water chamber 131, thereby completing installation of the unit of the water-chamber working apparatus 1. If the shaft-position regulation means 7 is not at the position where the shaft-position regulation means 7 comes into contact with the tube plate 137, the worker only needs to push the support shaft 2 up to the position where the shaft-position regulation means 7 comes into contact with the tube plate 137 by the attachment jig.

As described above, the water-chamber working apparatus 1 according to the present embodiment performs a predetermined work inside the water chamber 131 of the steam generator 130. The water-chamber working apparatus 1 includes the support shaft 2 provided to be extendable and retractable, the rotary means 3 respectively provided at opposite ends of the support shaft 2 rotatably around the vertical shaft center, while coming into contact with the inner wall surface 131a of the water chamber 131 by extension of the support shaft 2, and the movable body 4 provided to be movable along the support shaft 2. The movable body 4 includes the extension and retraction mechanism 13 that drives the support shaft 2 to extend or retract.

According to the water-chamber working apparatus 1, the support shaft 2 is spanned in the water chamber 131 by extension thereof, and the movable body 4 moves along the support shaft 2. Therefore, the movable body 4 can be stably supported in the water chamber 131, and can be easily moved. Furthermore, the support shaft 2 moves horizontally by rotation of the rotary means 3. Accordingly, the movable body 4 can be moved to another area in which the support shaft 2 is spanned. That is, the water-chamber working apparatus 1 according to the present embodiment can be simplified in design for stably supporting the movable body 4 in the water chamber 131 as compared to a water-chamber working apparatus in a conventional mode in which the movable body is suspended from the tube plate, and working hours for remote-controlling the movable body 4 can be reduced.

Furthermore, according to the water-chamber working apparatus 1, because the support shaft 2 includes the extension and retraction mechanism 13, the horizontal movement of the support shaft 2 can be remote-controlled.

The water-chamber working apparatus 1 according to the present embodiment further includes the swinging shaft 12 provided to be extendable and retractable to support the movable body that is provided to be movable, with the base end thereof being provided to be swingable on the support shaft and the rotary unit being provided at the apex thereof. The support shaft 2 and the swinging shaft 12 include the extension and retraction mechanism 13 that drives the support shaft 2 and the swinging shaft 12 to extend or retract.

The inner wall surface 131a of the water chamber 131 is formed in a quarter spherical shape, and thus it is difficult to move the movable body 4 to the corners of the tube plate 137. In this regard, according to the water-chamber working apparatus 1, the movable body 4 can be moved to the corners of the tube plate 137 by the swinging shaft 12 by moving the movable body 4 along the swinging shaft 12, while swinging the swinging shaft 12 along the arc-like shape of the water chamber 131.

Furthermore, in the water-chamber working apparatus 1 according to the present embodiment, the rotary means 3 includes the drive mechanism 33 that drives rotation of the rotary means 3.

According to the water-chamber working apparatus 1, the horizontal movement of the support shaft 2 can be remote-controlled by extension and retraction of the support shaft 2 (and the swinging shaft 12) and rotation of the rotary means 3.

Furthermore, in the water-chamber working apparatus 1 according to the present embodiment, the rotary means 3 includes the rotation-direction changing mechanism 11 that can change the rotation direction in the mode in which the rotary means 3 rotates around the horizontal shaft center.

According to the water-chamber working apparatus 1, because the rotary means 3 includes the rotation-direction changing mechanism 11, the water-chamber working apparatus 1 can be vertically moved in the water chamber 131 while the rotary means 3 is rotating, at the time of installing the water-chamber working apparatus 1 in the water chamber 131. Accordingly, the movable body 4 can be easily moved to facilitate installation of the water-chamber working apparatus 1.

Effects identical to those of the first embodiment described above can be also achieved in the present embodiment by including the guide means 6, the shaft-position regulation means 7, the movable-body position detection means 8, the probe (flaw detection means) 5, and the imaging means 9 and 10 explained in the first embodiment.

### Reference Signs List

- 1: WATER-CHAMBER WORKING APPARATUS
- 2: SUPPORT SHAFT
- 21: DIVIDED SHAFT
- 22: EXTENSION MECHANISM
- 3: ROTARY MEANS
- 31: FRAME
- 32: ROLLER
- 33: DRIVE MECHANISM
- 33a: MOTOR
- 33b: ROTATION TRANSMISSION UNIT
- 4: MOVABLE BODY
- 41: WHEEL
- 42: ROTARY SHAFT
- 43: VEHICLE BODY
- 44: DRIVE MOTOR
- 45: SUSPENSION MECHANISM
- 5: PROBE (WORKING DEVICE)
- 51: PROBE SUPPORT BODY
- 52: WORKING TUBE
- 6: GUIDE MEANS
- 7: SHAFT-POSITION REGULATION MEANS
- 8: MOVABLE-BODY POSITION DETECTION MEANS
- 9, 10: CAMERA (IMAGING MEANS)
- 11: ROTATION-DIRECTION CHANGING MECHANISM
- 11a: SHAFT
- 11b: ROTATION MECHANISM
- 12: SWINGING SHAFT
- 12a: FRAME
- 12b: ROTARY SHAFT
- 13: EXTENSION AND RETRACTION MECHANISM
- 14: ELASTIC MEMBER
- 81: SWITCH
- 82: ACTUATION UNIT
- 130: STEAM GENERATOR
- 131, 133: WATER CHAMBER
- 131a: INNER WALL SURFACE OF WATER CHAMBER
- 132: HEAT TRANSFER TUBE
- 137: TUBE PLATE
- 138: MAINTENANCE HATCH

## Claims

1. A water-chamber working apparatus that performs a predetermined work inside a water chamber of a steam generator, comprising:
a support shaft that is formed to be extendable and retractable;
a rotary unit that is respectively provided at opposite ends of the support shaft and is provided rotatably around a vertical shaft center, while coming into contact with an inner wall surface of the water chamber by extension of the support shaft; and
a movable body that is provided to be movable along the support shaft.

2. The water-chamber working apparatus according to claim 1, wherein the support shaft includes an extension mechanism that biases the support shaft in an extending direction constantly, and the rotary unit includes a drive mechanism that drives rotation of the rotary unit.

3. The water-chamber working apparatus according to claim 1, wherein the support shaft includes an extension and retraction mechanism that drives the support shaft to extend or retract.

4. The water-chamber working apparatus according to claim 1, further comprising a swinging shaft that is provided to be extendable and retractable to support the movable body, with a base end thereof being provided on the support shaft and being swingable in a horizontal direction, and the rotary unit being provided at an apex thereof.

5. The water-chamber working apparatus according to claim 4, wherein the support shaft and the swinging shaft include an extension mechanism that biases the support shaft and the swinging shaft, respectively, in an extending direction constantly, and the rotary unit includes a drive mechanism that drives rotation of the rotary unit.

6. The water-chamber working apparatus according to claim 4, wherein the support shaft and the swinging shaft include an extension and retraction mechanism that drives the support shaft and the swinging shaft to extend or retract, respectively.

7. The water-chamber working apparatus according to claim 3 or 6, wherein the rotary unit includes a drive mechanism that drives rotation of the rotary unit.

8. The water-chamber working apparatus according to any one of claims 1 to 7, wherein the rotary unit includes a rotation-direction changing mechanism that can change a rotation direction in a mode in which the rotary unit rotates around a horizontal shaft center.

9. The water-chamber working apparatus according to any one of claims 1 to 8, further comprising a guide unit that guides a working tube extending from a working device that is provided in the movable body along with a movement of the movable body.

10. The water-chamber working apparatus according to any one of claims 1 to 9, further comprising a shaft-position regulation unit that regulates a shortest approaching position between the support shaft and a tube plate of the water chamber.

11. The water-chamber working apparatus according to any one of claims 1 to 10, further comprising a movable-body position detection unit that detects a shortest approaching position between the movable body and the rotary unit.

12. The water-chamber working apparatus according to any one of claims 1 to 11, further comprising a flaw detection unit that performs, as a predetermined work, detection of a flaw formed in heat transfer tubes provided in the steam generator.

13. The water-chamber working apparatus according to any one of claims 1 to 12, further comprising an imaging unit that images moving positions of the movable body.
